# EUROPEAN PATENT APPLICATION

(11) **EP 4 811 237 A1**
(43) Date of publication of application: **23.09.2026**
(21) Application number: 26159165.5
(22) Date of filing: 17.02.2026
(51) Int. Cl.: G06Q 10/0633, G06Q 10/10

(54) **INFORMATION PROCESSING SERVER, INFORMATION PROCESSING SYSTEM, AND INFORMATION PROCESSING METHOD FOR AUTOMATED WORKFLOW MANAGEMENT**

(30) Priority: 21.03.2025 JP 2025047419
(71) Applicant: Toshiba TEC Kabushiki Kaisha, Tokyo 141-8562 (JP)
(72) Inventor: Sasaki, Takahiro, Tokyo, 141-8562 (JP)
(74) Representative: Bandpay & Greuter

(57) **Abstract**

According to an embodiment, an information processing server for an information processing system for managing automated workflows to prevent leakage of sensitive information includes a communication interface connectable to a network, a storage unit, and a processor. The processor is configured to acquire workflow definition data that defines processes or tasks to be performed when a workflow corresponding to the workflow definition data is executed. The definition data may include an authentication information area in which user authentication information has been set, such as for the purposes of accessing a cloud-service storage account or the like. The processor generates, based on the workflow definition data, a workflow template including an authentication information area from which the user authentication information has been cleared, and then outputs the workflow template to be used by other users or the like.

## Description

### FIELD

Embodiments described herein relate generally to an information processing server, an information processing system, and an information processing method for automated workflow management.

### BACKGROUND

In recent years, automated workflows have been introduced by different companies for the purpose of improving business efficiency and the like. A technique for generating and editing a workflow template is known. When the workflow can be widely used, a scenario in which a workflow generated by one company is provided to another company may occur. In such a scenario, the workflow definition data for the original company may be shared, but the workflow definition data may include sensitive information that requires particular attention in handling, such as user or account authentication information.

### DISCLOSURE OF INVENTION

To this end, there is provided an information processing server, comprising: a communication interface connectable to a network; a storage unit; and a processor configured to: acquire workflow definition data, the workflow definition data defining processes to be performed when a workflow corresponding to the workflow definition data is executed and including an authentication information area in which user authentication information has been set; generate, based on the workflow definition data, a workflow template including an authentication information area from which the user authentication information has been cleared; and output the workflow template.

In some embodiments, the processor acquires the workflow definition data from the storage unit, the workflow definition data being stored in association with a workflow owner ID.

In some embodiments, the processor outputs the workflow template to the storage unit.

In some embodiments, the processor is further configured to: receive a request to execute the workflow template from a client terminal via the network.

In some embodiments, the processor is further configured to: execute the workflow template when a user ID associated with the client terminal is associated with the workflow owner ID of the workflow template.

In some embodiments, the processor is further configured to: check the acquired workflow definition data for a preset information field in which a value may be set; and clear the value from the preset information field when generating the workflow template based on the workflow definition data.

In some embodiments, the processor is further configured to: check the acquired workflow definition data for a preset character string; and delete the preset character string when generating the workflow template based on the workflow definition data.

In some embodiments, the processor is further configured to: receive a deployment destination for the workflow template; compare the deployment destination to a setting value in the workflow template; and replace the setting value with a value corresponding to the deployment destination if the setting value differs from the value corresponding to the deployment destination.

There is also provided an information processing system, comprising: the above information processing server; and a client terminal (2) connected to a network, wherein the processor is further configured to: output the workflow template to the client terminal.

In some embodiments of the system, the processor is further configured to: receive a deployment destination for the workflow template from the client terminal.

There is further provided an information processing method for an information processing system for managing automated workflows, the method comprising: acquiring workflow definition data, the workflow definition data defining processes to be performed when a workflow corresponding to the workflow definition data is executed and including an authentication information area in which user authentication information has been set; generating, based on the workflow definition data, a workflow template including an authentication information area from which the user authentication information has been cleared; and outputting the workflow template.

In some embodiments of the method, the workflow definition data is acquired from a storage unit of an information processing server of the information processing system, the workflow definition data being stored in association with a workflow owner ID.

In some embodiments of the method, the workflow template is output to the storage unit.

In some embodiments, the method further comprises: receiving, at the information processing server, a request to execute the workflow template from a client terminal via a network.

In some embodiments, the method further comprises: executing the workflow template when a user ID associated with the client terminal is associated with the workflow owner ID of the workflow template.

In some embodiments, the method further comprises: checking the acquired workflow definition data for a preset information field in which a value may be set; and clearing the value from the preset information field when generating the workflow template based on the workflow definition data.

In some embodiments, the method further comprises: checking the acquired workflow definition data for a preset character string; and deleting the preset character string when generating the workflow template based on the workflow definition data.

### BRIEF DESCRIPTION OF THE DRAWINGS

FIG. 1 is a diagram illustrating an example of an information processing system.
FIG. 2 is a functional block diagram of a processor of an information processing server.
FIG. 3 is a functional block diagram of an information processing server.
FIG. 4 is a flowchart of a generating process for a workflow definition template.
FIG. 5 is a flowchart illustrating a first example of a generating and importing process of a workflow definition template.
FIG. 6 is a flowchart illustrating an example of a deploying process of a workflow definition template.
FIG. 7 is a flowchart illustrating a second example of a generating and importing process.
FIG. 8 is a flowchart illustrating a third example of a generating and importing process.
FIG. 9 is a diagram illustrating a workflow screen based on workflow definition data.
FIG. 10 is a diagram illustrating a workflow screen based on a workflow template.

### DETAILED DESCRIPTION

When workflow definition data to be shared includes information (sensitive information) that requires attention in handling, such as authentication information, it is conceivable that a person in charge will delete such information, but this generally is not sufficient as a measure for preventing information leakage since such a manual step may be skipped or forgotten, and thus technological improvement in terms of increased security assurance is desired.

A problem to be solved is to provide an information processing server, an information processing system, and an information processing method that are more effective than related art in preventing leakage of sensitive information that is included within workflow definition data and requires care in handling and sharing.

In general, according to one embodiment, an information processing server includes a communication interface connectable to a network, a storage unit, and a processor. The processor is configured to: acquire workflow definition data, the workflow definition data defining processes to be performed when a workflow corresponding to the workflow definition data is executed and including an authentication information area in which user authentication information has been set; generate, based on the workflow definition data, a workflow template including an authentication information area from which the user authentication information has been cleared; and output the workflow template to be executed by other users or the like.

Hereinafter, an information processing system according to certain example embodiment will be described with reference to the drawings.

### Configuration

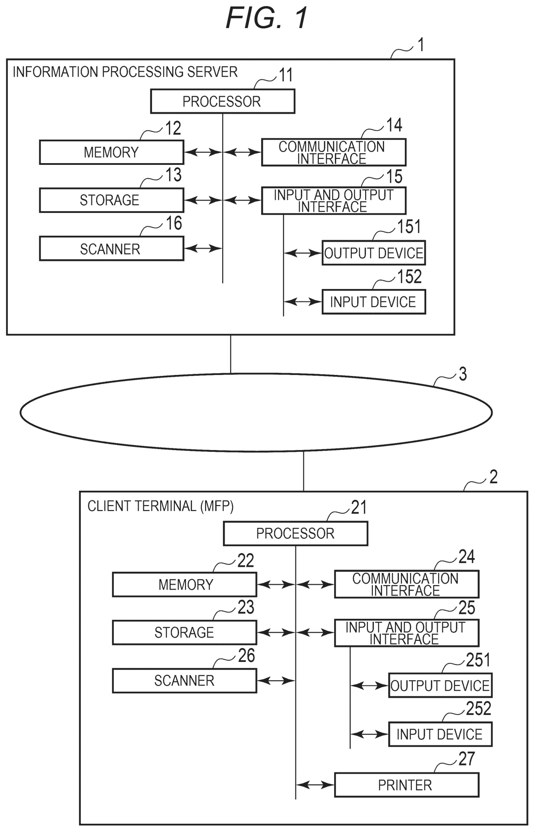

FIG. 1 is a diagram illustrating an example of an information processing system according to an embodiment.

As illustrated in FIG. 1, the information processing system includes an information processing server 1 and a client terminal 2. The information processing server 1 may be connected to one or more client terminals 2 via a local area network (LAN) or the like. For example, the information processing server 1 comprises one or more general-purpose computers. The client terminal 2 may be a general-purpose computer or a multifunction peripheral (MFP) incorporating functions equivalent to those of the general-purpose computer.

The information processing server 1 can be implemented as a computer including one or more processors, a memory, a storage, and an interface. As illustrated in FIG. 1, the information processing server 1 includes a processor 11, a memory 12, a storage 13, a communication interface 14, an input and output interface 15, and a scanner 16.

The processor 11 may be a central processing unit (CPU) or the like. The processor 11 executes various processes based on a control program and control data stored in the memory 12. For example, the processor 11 executes an application program stored in the memory 12 to acquire workflow definition data, generate a workflow definition template, and output the workflow definition template. In this context, workflow definition data describes a procedure of a workflow process.

The memory 12 includes a read-only memory (ROM), a random access memory (RAM), and a non-volatile memory (NVM). The ROM and the NVM store a control program, control data, or the like. The RAM functions as a work memory and stores temporary data.

The storage 13 stores workflow definition data, a workflow definition template, and the like. The storage 13 may store a control program, control data, or the like.

The communication interface 14 communicates with the client terminal 2 and transmits and receives data to and from the client terminal 2.

The input and output interface 15 is connected to an output device 151 and an input device 152. For example, the output device 151 is a display, and the input device 152 is a keyboard and a mouse. Alternatively, the output device 151 and the input device 152 may be implemented as a touch panel display. For example, the touch panel display displays (outputs) a workflow based on the workflow definition template, and receives an input for the displayed workflow.

The scanner 16 optically reads an image printed on a sheet and outputs read image data.

In the present embodiment, an MFP having functions equivalent to those of a general-purpose computer is the client terminal 2. The client terminal 2 can be implemented as a computer including one or more processors, a memory, a storage, and an interface. As illustrated in FIG. 1, the client terminal 2 includes a processor 21, a memory 22, a storage 23, a communication interface 24, an input and output interface 25, a scanner 26, and a printer 27.

The processor 21 can be a CPU or the like. The processor 21 executes various processes based on a control program and control data that are stored in the memory 22. For example, the processor 21 controls transmission and reception of information by the communication interface 24 by executing a program stored in the memory 22, and prints an image based on a print job in response to a request from the information processing server 1.

The memory 22 includes a ROM, a RAM, and an NVM. The ROM and the NVM store a control program, control data, and the like. The RAM functions as a work memory and stores temporary data.

The storage 23 stores the workflow definition template and the like when transmitted from the information processing server 1. The storage 13 may also store a control program, control data, or the like.

The communication interface 24 wirelessly communicates with the information processing server 1 and transmits and receives data to and from the information processing server 1.

The input and output interface 25 is connected to an output device 251 and an input device 252. For example, the output device 251 is a display, and the input device 252 is a keyboard and a mouse. Alternatively, the output device 251 and the input device 252 may be implemented as a touch panel display. For example, the touch panel display displays (outputs) a workflow based on the workflow definition template, and receives an input for the displayed workflow.

The scanner 26 optically reads an image printed on a sheet and outputs read image data. The printer 27 prints, on a sheet, an image based on the read image data output from the scanner 26. The printer 27 prints, on a sheet, an image based on image data received via the communication interface 24.

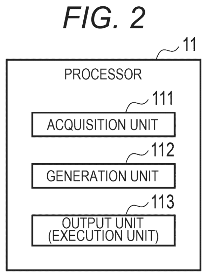

FIG. 2 is a functional block diagram of a processor of an information processing server 1.

As illustrated in FIG. 2, the processor 11 provides the functions of an acquisition unit 111, a generation unit 112, and an output unit (execution unit) 113. In the present example, processor 11 is configured to provide these functions by the execution of a software program or the like. The acquisition unit 111 acquires workflow definition data. The workflow definition data includes an authentication information area in which authentication information can be set. For example, the workflow definition data may include information that requires attention in handling. Such information, also referred to as sensitive information, may include authentication information (e.g., account logon information), organization information (e.g., corporate information), and personal information (e.g., names, addresses, contact information). The authentication information may be an access token that is an encrypted character string or the like. The organization information may be information such as a department name. The personal information may be information such as a personal name, an email address, and a telephone number.

The generation unit 112 generates, based on the supplied workflow definition data, a workflow definition template including an authentication information area from which the authentication information has been cleared.

The output unit 113 outputs (or executes) the workflow definition template.

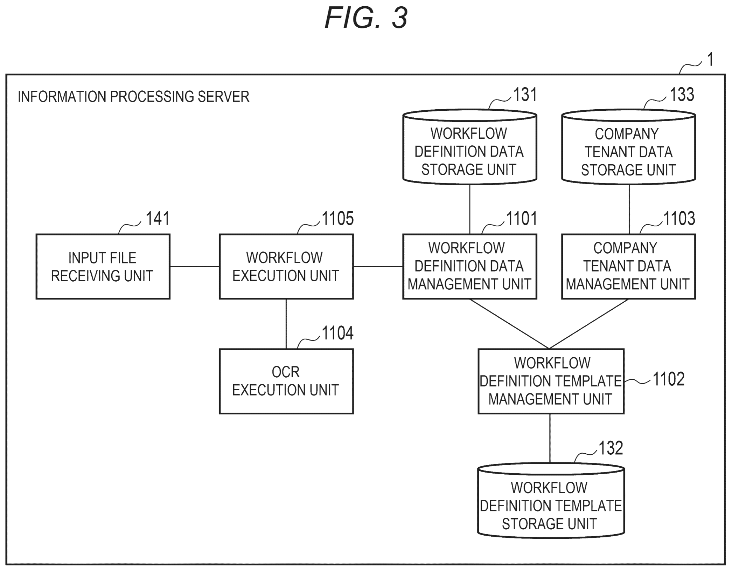

FIG. 3 is a functional block diagram of the information processing server 1.

As illustrated in FIG. 3, the storage 13 (corresponding to storage unit) of the information processing server 1 includes a workflow definition data storage unit 131, a workflow definition template storage unit 132, and a company tenant data storage unit 133. The communication interface 14 of the information processing server 1 provides the functions of an input file receiving unit 141. The processor 11 of the information processing server 1 provides the functions of a workflow definition data management unit 1101, a workflow definition template management unit 1102, a company tenant data management unit 1103, an optical character reader (OCR) execution unit 1104, and a workflow execution unit 1105. In some examples, the acquisition unit 111 may provide the functions of the workflow definition data management unit 1101. The generation unit 112 may provide the functions of the workflow definition template management unit 1102. The output unit 113 may provide the functions of the workflow execution unit 1105.

The workflow definition data storage unit 131 stores workflow definition data. The workflow definition template storage unit 132 stores a workflow definition template. The company tenant data storage unit 133 stores company tenant data.

For example, the workflow definition data storage unit 131 stores workflow definition data associated with identification information, such as an owner identification (ID) or a company ID. Alternatively, the workflow definition data may include or incorporate in some manner an owner ID or a company ID.

The workflow definition data management unit 1101 manages the workflow definition data stored in the workflow definition data storage unit 131. The workflow definition template management unit 1102 manages the workflow definition template stored in the workflow definition template storage unit 132. The company tenant data management unit 1103 manages the company tenant data stored in the company tenant data storage unit 133. The OCR execution unit 1104 recognizes characters, text, or the like included in the image data output from the scanner 16. The workflow execution unit 1105 executes a workflow.

### Operations

First, generation of the workflow definition data will be described.

A workflow definer, that is, a person who defines a workflow, creates a workflow definition using the information processing server 1. For example, the information processing server 1 accepts login based on an ID and a password input by the workflow definer via the input device 152. The workflow definer describes with inputs, via the input device 152 or the like, a procedure for the execution of the workflow while viewing a workflow generation screen or the like displayed on the output device 151. The processor 11 generates the workflow definition data matching the inputs from the workflow definer. The workflow definition data storage unit 131 stores the workflow definition data associated with IDs. When the input ID is a first owner ID or a first company ID, the workflow definition data storage unit 131 stores the workflow definition data associated with the first owner ID or the first company ID.

Next, the execution of the workflow will be described.

A workflow user, that is, a person who uses the workflow, executes the workflow via the information processing server 1 or the client terminal 2. For example, the workflow user inputs, via the input device 152, an execution request designating a particular workflow to be executed from a workflow execution screen or the like displayed on the output device 151. The processor 11 (workflow execution unit 1105) calls designated workflow definition data based on the execution request, interprets the workflow definition data, and then executes a workflow based on the workflow definition data.

Next, deployment of a workflow will be described. For example, a workflow definition template generated from the workflow definition data managed by a particular owner or a particular company (referred to in this description as a first owner or a first company) can be sent or deployed to another owner or another company (referred to in this description as a second owner or a second company).

The workflow definition data management unit 1101 reads the workflow definition data from the workflow definition data storage unit 131. The workflow definition template management unit 1102 then generates a workflow definition template based on the read workflow definition data. The workflow definition template storage unit 132 then stores the generated workflow definition template. The workflow definition template stored in the workflow definition template storage unit 132 may be used by the first owner or the first company or deployed to the second owner or the second company.

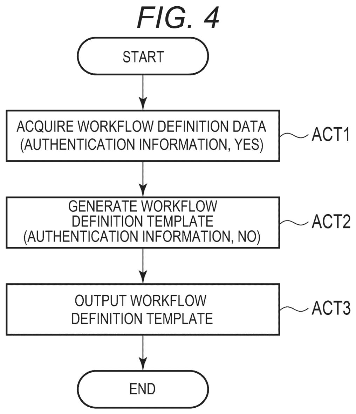

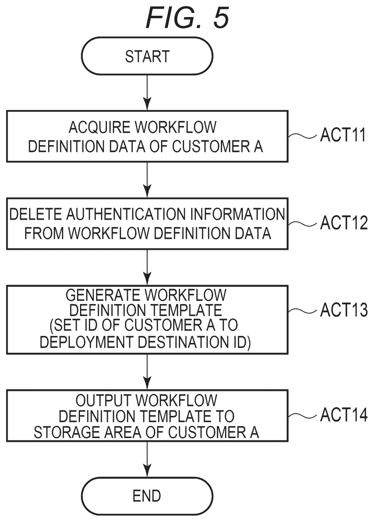

FIG. 4 is a flowchart illustrating an outline of a generating process for a workflow definition template according to an embodiment. Additional aspects of the generating process will be described with reference to the flowcharts of FIGS. 5 to 8.

The workflow definition data management unit 1101 acquires workflow definition data associated with a first owner ID or a first company ID from the workflow definition data storage unit 131 (ACT1). This workflow definition data may include information that requires attention in handling (sensitive information). For example, the acquired workflow definition data includes therein an authentication information area in which authentication-type information has been preset.

The workflow definition template management unit 1102 detects the existence of the authentication information area in the acquired workflow definition data, and detects that authentication information has been set in the authentication information area. The workflow definition template management unit 1102 next generates a workflow definition template based on the acquired workflow definition data, with the authentication information area cleared of the preset authentication information(ACT2). In other words, the workflow definition template management unit 1102 converts the initial workflow definition data, which includes an authentication information area in which authentication information has already been set, into a workflow definition template that includes an authentication information area but from which the previous authentication information has been cleared. The workflow definition template storage unit 132 stores the generated workflow definition template. The authentication information area in which the authentication information may be cleared to a blank value or a predetermined code may be stored therein.

The workflow execution unit 1105 requests the workflow definition template, and then outputs the workflow definition template to the workflow definition template management unit 1102 (ACT3). For example, the workflow execution unit 1105 outputs a workflow execution screen corresponding to the workflow definition template to the output device 151. The workflow execution unit 1105 may then execute a workflow corresponding to the workflow definition template based on an execution request sent from the input device 152.

FIG. 5 is a flowchart illustrating a first example of a generating and importing process of a workflow definition template according to the embodiment.

For example, the workflow definer selects a first owner ID or a first company ID (in this example, a customer A) via the input device 152 and selects an importing process while viewing a screen related to the template generating and importing process as displayed on the output device 151.

The workflow definition data management unit 1101 reads the workflow definition data associated with the first owner ID (or the first company ID) from the workflow definition data storage unit 131. That is, the workflow definition data management unit 1101 acquires particular workflow definition data from the workflow definition data storage unit 131 (ACT11).

The workflow definition data in this example includes an authentication information area in which the authentication information has already been set, but the workflow definition data management unit 1101 deletes the authentication information (ACT12). In other words, the workflow definition data management unit 1101 clears the authentication information that was previously set in the authentication information area of the acquired workflow definition data.

The workflow definition data management unit 1101 next generates a workflow definition template based on the workflow definition data (from which the authentication information has been deleted) (ACT13). The workflow definition data management unit 1101 changes the information in the authentication information area from the first owner ID (or the first company ID) to a deployment destination ID.

The workflow definition template storage unit 132 may have a storage area for each owner or company. The workflow definition data management unit 1101 outputs the workflow definition template to the storage area for the first owner ID (or the first company ID) (ACT14).

The workflow execution unit 1105 can acquire the workflow definition template stored in the storage area and execute a workflow based on the acquired workflow definition template. For example, a touch panel display corresponding to the input and output interface 15 displays (outputs) workflow details corresponding to the workflow definition template, and then receives inputs for executing the workflow.

Alternatively, the information processing server 1 may provide workflow details corresponding to the workflow definition template to the client terminal 2, and a touch panel display )corresponding to the input and output interface 25) of the client terminal 2 may display (output) the workflow details, and then receive inputs for executing the workflow.

As described above, the information processing server 1 generates and outputs a workflow definition template from an original workflow. Thus, even when the original workflow includes definition details incorporating sensitive information such as the authentication information, the generated "deployable" workflow definition template will not include the authentication information, and the leakage of the authentication information can thus be prevented.

That is, the original workflow definition data as generated may include sensitive information but such information is removed before a deployable version is created. In this context, the sensitive information of a workflow may be such things as the title (name) of the workflow or one or more values set within the workflow definition by a user. An owner ID or a company ID matching the original owner ID or company ID in the workflow definition data may now be set as the deployment destination ID in the workflow definition template, but since such information is removed when the template is shared (deployed) leakage of the sensitive information can be prevented. Furthermore, leakage may be prevented by storing the workflow definition template in a storage area managed by the same owner or company as the workflow definition data.

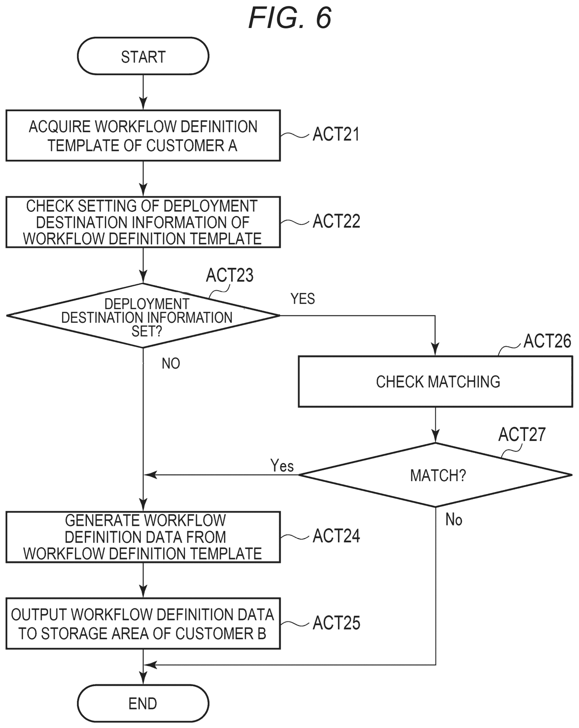

FIG. 6 is a flowchart illustrating an example of a deploying process of a workflow definition template according to the embodiment.

For example, a person in charge of deployment selects or designates, via the input device 152, a first owner ID or a first company ID (for example, customer A) that will be supplying (originating) the template to be deployed. The person in charge then selects, via the input device, a second owner ID or a second company ID (for example, customer B) as the deployment destination for the template. The person in charge designates the deploying process to be used from the deploying process screen or the like displayed on the output device 151. The workflow definition template management unit 1102 reads a workflow definition template from the workflow definition template storage unit 132 from a first storage area controlled by the first owner ID (or the first company ID). That is, the workflow definition template management unit 1102 acquires a designated workflow definition template from the first storage area (ACT21).

The workflow definition template management unit 1102 checks the setting of the deployment destination information in the acquired workflow definition template (ACT22). If an ID has not been set in the deployment destination information (ACT23, NO), that is, if the deployment destination information is empty, the workflow definition data management unit 1101 will generate workflow definition data based on the acquired workflow definition template. That is, the workflow definition data management unit 1101 puts a value into empty slots or the like of the acquired workflow definition template and generates workflow definition data from the template (ACT24). In other words, the workflow definition data management unit 1101 converts the workflow definition template into workflow definition data. The workflow definition data management unit 1101 next outputs the generated workflow definition data to a second storage area of the workflow definition data storage unit 131 (ACT25) controlled or managed by the second owner or second company (deployment destination). The workflow definition data is now stored in the second storage area.

If an ID has been set in the deployment destination information (ACT23, YES), that is, if the deployment destination information value is not empty, the workflow definition data management unit 1101 next checks whether the ID already set in the deployment destination information matches the ID of the selected deployment destination (ACT26). After the match is checked, the workflow definition data management unit 1101 sets values as appropriate in the slots of the acquired workflow definition template to generate the workflow definition data (ACT24). The workflow definition data management unit 1101 outputs the generated workflow definition data to the second storage area (managed by the second owner ID or the second company ID) of the workflow definition data storage unit 131 (ACT25).

If a mismatch is between current values and the deployment destination information, the workflow definition data management unit 1101 pauses the generation of the workflow definition data and outputs guidance information, such as a warning indicating the mismatch and a suggestion to reconcile the mismatch. The output device 151 displays the guidance information to notify the person in charge of a workflow deployment mismatch and possible presence of sensitive information.

If mismatch is found, the workflow definition data management unit 1101 may clear information of the workflow definition template and set values corresponding to the intended deployment destination to generate workflow definition data. When information is to be cleared, the workflow definition data management unit 1101 outputs guidance information related to the clearing, or clears the information in response to an approval input for the clearing of the information. An area, value, or slot may be blank left blank, a predetermined code may be stored, or a dummy value set.

In some examples, if a mismatch is found, the workflow definition data management unit 1101 may change the ID set in the deployment destination information of the template to another ID and change values of each setting item in the acquired workflow definition template to those appropriate to generate the workflow definition data. When an ID set in the deployment destination information is to be changed, the workflow definition data management unit 1101 may output guidance information related to the change of the ID, or change the ID in response to an approval input for a change.

If an ID has not been set in the deployment destination information for a workflow definition template, the information processing server 1 may output the workflow definition template rather than the workflow definition data. The information processing server 1 may output a workflow definition template if the ID of the deployer (template originator) matches the ID of the deployment destination, and not output the workflow definition template if the deployer and destination IDs do not match. Alternatively, if the deployer ID of the does not match the deployment destination ID, the information processing server 1 may clear or change information in the template. Accordingly, the sensitive information that might be included in the workflow definition template can be prevented from leaking to an unintended deployment destination.

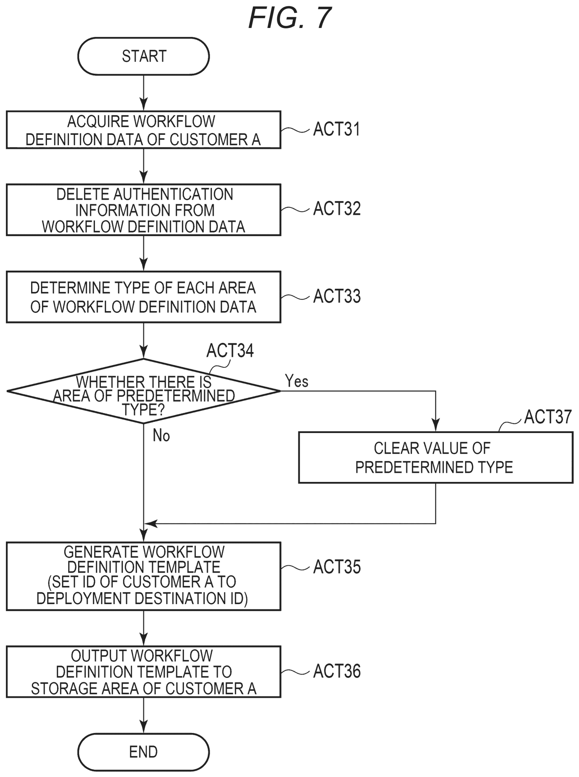

FIG. 7 is a flowchart illustrating a second example of the generating and importing process of a workflow definition template according to an embodiment.

For example, the workflow definer selects the first owner ID or the first company ID (for example, the customer A) via the input device 152 and designates the importing process while viewing a screen for the generating and importing process of a template displayed on the output device 151.

The workflow definition data management unit 1101 reads workflow definition data associated with the first owner ID or the first company ID from the workflow definition data storage unit 131. That is, the workflow definition data management unit 1101 acquires the workflow definition data from the workflow definition data storage unit 131 (ACT31).

The workflow definition data includes an authentication information area in which authentication information (e.g., username/password) has been set, and the workflow definition data management unit 1101 deletes the authentication information from the acquired workflow definition data (ACT32). In other words, the workflow definition data management unit 1101 clears the authentication information that was set in the authentication information area of the acquired workflow definition data.

The workflow definition data management unit 1101 identifies the data type for different areas included in the workflow definition data (ACT33). Types of workflow definition data include a date type, a list type, and a text type. For example, the date type area includes calendar date data. The list type area includes list data. The text type area includes any character string (a combination of characters, numbers, symbols, or the like) which may be a name or a telephone number, for example.

The workflow definition data management unit 1101 can receive a user designation of a type ("predetermined type") of data for which sensitive information is considered likely to be included. If there is no area matching the designated predetermined type in the workflow definition data (ACT34, NO), the workflow definition data management unit 1101 generates a workflow definition template based on the workflow definition data (ACT35). For example, the workflow definition data management unit 1101 changes a first owner ID or a first company ID to a deployment destination ID in the workflow definition template.

The workflow definition template storage unit 132 has a storage area for each owner or company, and the workflow definition data management unit 1101 outputs the workflow definition template to the storage area of the owner ID or the company ID (ACT36).

If there is an area of a designated predetermined type in the workflow definition data (ACT34, YES), the workflow definition data management unit 1101 clears the value(s) of the area (ACT37), and then generates a workflow definition template based on the workflow definition data in which the value is cleared (ACT35). The workflow definition data management unit 1101 outputs the generated workflow definition template to the storage area (ACT36).

The information processing server 1 clears the value of the area of a predetermined type, and generates (and outputs) a workflow definition template based on the workflow definition data from which the value of the area of the predetermined type has been cleared. Accordingly, the leakage of the sensitive information is prevented.

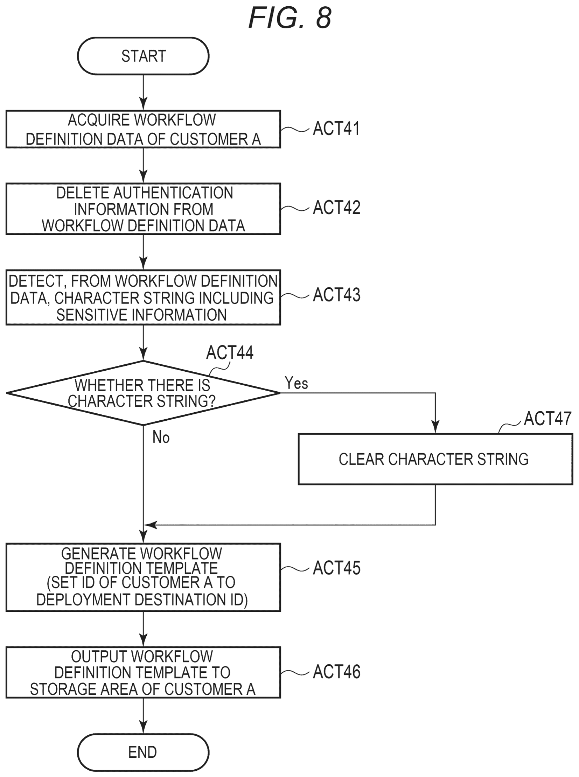

FIG. 8 is a flowchart illustrating a third example of a generating and importing process of a workflow definition template according to an embodiment.

For example, the workflow definer selects a first owner ID or the first company ID (for example, the customer A) via the input device 152 and designates an importing process while viewing a screen for the generating and importing process displayed on the output device 151.

The workflow definition data management unit 1101 reads the workflow definition data associated with the first owner ID or the first company ID from the workflow definition data storage unit 131. That is, the workflow definition data management unit 1101 acquires workflow definition data from the workflow definition data storage unit 131 (ACT41).

In this example, the workflow definition data includes an authentication information area in which the authentication information has been set, and the workflow definition data management unit 1101 deletes the authentication information from the acquired workflow definition data (ACT42). In other words, the workflow definition data management unit 1101 clears the authentication information from the authentication information area of the acquired workflow definition data.

For example, the workflow definition data storage unit 131 stores a preset sensitive information list. The sensitive information list may be generated by any method. For example, the sensitive information list is generated using a technique such as artificial intelligence (AI). The workflow definition data management unit 1101 detects, in the workflow definition data, either a character string including sensitive information (e.g., matching an item on the sensitive information list) or a predetermined area including the sensitive information (e.g., matching an item on the sensitive information list). The sensitive information list may be generated by any method. The matching and detection of sensitive information (ACT43) of the information in the workflow definition data can be performed by AI or otherwise. Similarly, the sensitive information list may reflect any desired confidentiality level and matching and detection determinations can reflect any appropriate confidence level.

If there is no sensitive character string (ACT44, NO), the workflow definition data management unit 1101 generates a workflow definition template based on the workflow definition data (from which the authentication information has been deleted) (ACT45). The workflow definition data management unit 1101 sets the first owner ID or the first company ID to a deployment destination ID included in the workflow definition template.

The workflow definition template storage unit 132 stores a first storage area for each owner or company, and the workflow definition data management unit 1101 outputs the workflow definition template, in which the first owner ID or the first company ID (for example, the customer A) is set as deployment destination information, to the first storage area managed by the first owner ID or the first company ID (ACT46). The workflow definition template is stored in the first storage area.

If there is a character string corresponding to the sensitive information (ACT44, YES), the workflow definition data management unit 1101 clears the character string (ACT47), and generates a workflow definition template from which the character string has been cleared (ACT45). The workflow definition data management unit 1101 outputs the generated workflow definition template to the first storage area (ACT46).

As described above, the information processing server 1 clears a character string including sensitive information, and generates and outputs a workflow definition template corresponding to the workflow definition data from which the character string has been cleared. Accordingly, the leakage of the sensitive information is prevented.

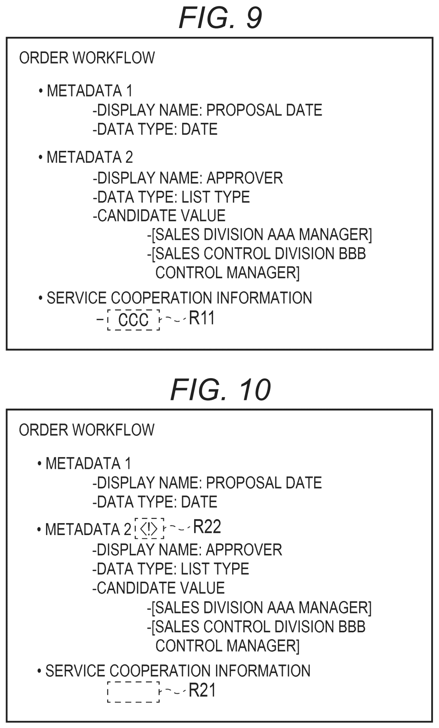

FIG. 9 is a diagram illustrating an example of a workflow screen based on workflow definition data according to the embodiment. FIG. 10 is a diagram illustrating an example of a workflow screen based on a workflow template according to the embodiment.

As illustrated in FIG. 9, the workflow screen includes an area R11. The area R11 includes "CCC" as authentication information.

As illustrated in FIG. 10, the workflow screen includes an area R21 and an area R22. The area R21 corresponds to the area R11 in FIG. 9. The area R21 does not include authentication information that was in area R11 ("CCC" is removed). The area R22 includes warning information.

The information processing server 1 generates a workflow definition template including the authentication information area (area R21) from which the authentication information ("CCC") has been cleared. That is, although the area R11 of the workflow screen matching the workflow definition data as illustrated in FIG. 9 includes the authentication information ("CCC"), the area R21 of the workflow screen matching the workflow definition template as illustrated in FIG. 10 does not include any authentication information. This may be achieved by the information processing server 1 clearing the authentication information ("CCC"). Accordingly, the leakage of the authentication information can be prevented.

When the information processing server 1 detects a predetermined area type or likely sensitive information (e.g., sensitive list information) in the workflow definition data, the information processing server 1 in this example sets warning information indicating that the predetermined type or likely sensitive information has been detected in the workflow template generated based on the original workflow definition data. For example, as illustrated in FIG. 10, the information processing server 1 sets warning information in an area R24. Accordingly, the attention to possible sensitive information (e.g., an approver name, a manager name, division names, etc.) can be promoted and the leakage of the sensitive information can be avoided.

A program according to an embodiment may be transferred by being stored in an electronic device to establish an information processing system. A program may be transferred without being stored in the electronic device, such as via a network or in a storage medium. Such a storage medium may be a non-transitory tangible medium that is computer-readable. In general, such a storage medium may be of any type or format, such as an optical disk or a memory card. A program may be transferred via a network and installed on a device of an information system or the like.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the scope of the disclosure. The accompanying claims are intended to cover such forms or modifications as would fall within the scope of the disclosure.

## Claims

1. An information processing server (1), comprising:
a communication interface (14) connectable to a network;
a storage unit (13); and
a processor (11) configured to:
acquire workflow definition data, the workflow definition data defining processes to be performed when a workflow corresponding to the workflow definition data is executed and including an authentication information area in which user authentication information has been set;
generate, based on the workflow definition data, a workflow template including an authentication information area from which the user authentication information has been cleared; and
output the workflow template.

2. The information processing server according to claim 1, wherein the processor acquires the workflow definition data from the storage unit, the workflow definition data being stored in association with a workflow owner ID.

3. The information processing server according to claim 1 or 2, wherein the processor outputs the workflow template to the storage unit.

4. The information processing server according to any one of claims 1 to 3, wherein the processor is further configured to:
receive a request to execute the workflow template from a client terminal via the network; and preferably,
execute the workflow template when a user ID associated with the client terminal is associated with the workflow owner ID of the workflow template.

5. The information processing server according to any one of claims 1 to 4, wherein the processor is further configured to:
check the acquired workflow definition data for a preset information field in which a value may be set; and
clear the value from the preset information field when generating the workflow template based on the workflow definition data.

6. The information processing server according to claims 1 to 5, wherein the processor is further configured to:
check the acquired workflow definition data for a preset character string; and
delete the preset character string when generating the workflow template based on the workflow definition data.

7. The information processing server according to any one of claims 1 to 6, wherein the processor is further configured to:
receive a deployment destination for the workflow template;
compare the deployment destination to a setting value in the workflow template; and
replace the setting value with a value corresponding to the deployment destination if the setting value differs from the value corresponding to the deployment destination.

8. An information processing system, comprising:
an information processing server (1) of any one of claims 1 to 7; and
a client terminal (2) connected to a network, wherein
the processor is further configured to:
output the workflow template to the client terminal.

9. The information processing system according to claim 8, wherein the processor is further configured to:
receive a deployment destination for the workflow template from the client terminal.

10. An information processing method for an information processing system for managing automated workflows, the method comprising:
acquiring workflow definition data, the workflow definition data defining processes to be performed when a workflow corresponding to the workflow definition data is executed and including an authentication information area in which user authentication information has been set;
generating, based on the workflow definition data, a workflow template including an authentication information area from which the user authentication information has been cleared; and
outputting the workflow template.

11. The information processing method according to claim 10, wherein the workflow definition data is acquired from a storage unit of an information processing server of the information processing system, the workflow definition data being stored in association with a workflow owner ID.

12. The information processing method according to claim 10 or 11, wherein the workflow template is output to the storage unit.

13. The information processing method according to any one of claims 10 to 12, further comprising:
receiving, at the information processing server, a request to execute the workflow template from a client terminal via a network; and preferably,
executing the workflow template when a user ID associated with the client terminal is associated with the workflow owner ID of the workflow template.

14. The information processing method according to any one of claims 10 to 13, further comprising:
checking the acquired workflow definition data for a preset information field in which a value may be set; and
clearing the value from the preset information field when generating the workflow template based on the workflow definition data.

15. The information processing method according to any one of claims 10 to 14, further comprising:
checking the acquired workflow definition data for a preset character string; and
deleting the preset character string when generating the workflow template based on the workflow definition data.
